# FASCICULE DE BREVET EUROPEEN

(11) **EP 0 608 170 B1**
(45) Date de publication et mention de la délivrance du brevet: **17.03.1999**
(21) Numéro de dépôt: 94400101.5
(22) Date de dépôt: 14.01.1994
(51) Int. Cl.: H04M 11/06, H04L 12/16, H04N 7/18

(54) **Procédé de visiophonie permettant l'accueil, et éventuellement l'appel, par un poste téléphonique**
Bildfernsprech-Verfahren für das Abfangen und gegebenenfalls Anrufen von einem Fernsprechgerät
Videophone method allowing intercepting and occasional calling by a telephone apparatus

(30) Priorité: 15.01.1993 FR 9300363
(43) Date de publication de la demande: 27.07.1994
(73) Titulaire: FRANCE TELECOM, 75015 Paris (FR)
(72) Inventeur: Decaesteke, Philippe, c/o MATRA COMMUNICATION, F-78392 Bois d'Arcy (FR); Marczak, Jean-Marc, c/o MATRA COMMUNICATION, F-78392 Bois d'Arcy (FR); Guichard, Jacques, c/o CENTRE NATIONAL D'ETUDE, F-92131 Issy les Moulineaux (FR)
(74) Mandataire: Fort, Jacques

(56) Documents cités:
- EP-A- 0 119 588
- EP-A- 0 374 949
- IEEE TRANSACTIONS ON CONSUMER ELECTRONICS vol. 36, no. 3 , Aoüt 1990 , NEW YORK US pages 753 - 757 T.NAGANAWA ET AL. 'A study of Audio communication Devices for ISDN'
- NTZ NACHRICHTENTECHNISCHE ZEITSCHRIFT vol. 45, no. 6 , Juin 1992 , BERLIN DE pages 428 - 439 R.HINZ 'Die Systemsteuerung für ein ISDN-Bildtelefon'
- INTERNATIONAL SWITCHING SYMPOSIUM 1987, SESSION A11, PAPER 6, vol. 4/4 , 20 Mars 1987 , PHOENIX, ARIZONA, US pages 875 - 879 P. LYHNE ET AL. 'ISDN - A Basis For Enhanced And New Services For The Next Decades'

## Description

L'invention concerne les procédés d'établissement d'une communication en visiophonie entre un terminal appelant et un terminal appelé par l'intermédiaire de réseaux publics ou privés, ainsi que les terminaux visiophoniques permettant de mettre en oeuvre un tel procédé.

Elle trouve une application particulièrement importante dans les installations téléphoniques ayant au moins un visiophone filtré par un poste téléphonique d'accueil, l'appel du visiophone à un numéro disponible pour les tiers, qu'on qualifiera par la suite de "public", provoquant l'orientation de l'appel entrant vers le poste téléphonique de filtrage ou poste "filtrant".

Les architectures classiques d'installation, où le poste de filtrage est un téléphone et non un visiophone, interdisent l'établissement de la communication sur un appel entrant depuis le réseau en dehors des périodes où le filtrage est éliminé, lorsque le terminal appelé a une constitution classique.

On rappelera tout d'abord la façon dont s'établit normalement un appel d'un visiophone appelant, à un visiophone appelé.

L'abonné appelant forme le numéro de son correspondant et commande l'envoi du message d'appel visiophonique. Le visiophone appelant tente alors d'établir une liaison sur un réseau RNIS par un premier canal B en mode CCBT (Communication de Circuit B Transparent). Si la communication est acceptée par le visiophone de destination, un éventuel deuxième canal B en mode CCBT est établi, si les visiophones le requièrent. La communication visiophonique peut alors avoir lieu, par exemple avec utilisation des protocoles et notamment du tramage H 221.

Si le premier canal B transparent ne peut être établi, parce que le poste destinataire n'est pas un terminal visiophonique mais un poste téléphonique ordinaire, le terminal visiophonique appelant établit un canal non transparent CCBNT et se replie en téléphonie traditionnelle, après avoir libéré le premier CCBT s'il avait déjà été établi.

Dans les autres cas, la communication s'établit suivant la sequence définie dans l'article de R. Hinz NTZ NACHRICHTENTECHNISCHE ZEITSCHRIFT vol. 45, no. 6, Juin 1992, BERLIN DE pages 428 - 439, intitulé "Die Systemsteuerung für ein ISDN-Bildtelefon".

Si le terminal visiophonique appelé est filtré par un poste téléphonique, le terminal visiophonique appelant ne pourra établir une communication de type visiophonique et se repliera en mode téléphonique.

Le document EP-A-0 528 732 propose un procédé permettant d'écarter cette impossibilité ; suivant ce procédé, une fois une communication téléphonique établie entre les terminaux, sur un canal CCBNT, on envoie, à partir du terminal appelé, un message de service inclus dans un message de libération de la ligne CCBNT et contenant un numéro secret d'appel direct (non filtré) du visiophone appelé et établit directement, à partir du terminal appelant, une liaison sur deux canaux de type B en utilisant le numéro secret d'appel non filtré.

Ce procédé donne de très bons résultats. Mais il exige que non seulement le terminal appelé, mais aussi le terminal appelant soient adaptés.

La présente invention vise notamment à fournir un procédé d'établissement de communication visiophonique vers un poste visiophonique filtré, susceptible d'être mis en oeuvre en n'exigeant que des adjonctions très réduites au terminal visiophonique appelé, autorisant l'interception de la communication provenant d'un terminal visiophonique appelant classique.

Dans ce but, l'invention propose notamment un procédé d'établissement d'une communication visiophonique depuis un terminal visiophonique appelant vers un terminal visiophonique appelé à deux canaux B, filé par un poste téléphonique, suivant la revendication 1.

L'invention propose également un terminal visiophonique permettant de mettre en oeuvre le procédé ci-dessus défini, à deux canaux et à numéro d'appel direct, ayant des moyens d'aiguillage d'appel entrant sur un premier canal B vers un poste téléphonique d'accueil par le second canal B. Diverses constitutions sont possibles pour remplir les fonctions mentionnées plus haut. Un mode avantageux, mais non exclusif, de réalisation du terminal est défini dans la revendication 2.

Le procédé ci-dessus défini permet l'accueil d'un appel provenant d'un terminal visiophonique appelant par un poste téléphonique ordinaire, puis le transfert de l'appel vers le terminal appelé sans perte ou coupure de la communication établie par un terminal visiophonique appelant. Il ne concerne pas les opérations effectuées au niveau du terminal appelant et part de l'hypothèse que l'appel provient d'une installation capable d'établir une liaison sur un premier canal B avec tramage H221, puis sur un second canal.

Dans le cas où l'appel provient d'un terminal visiophonique, le procédé suivant l'invention n'exige aucune modification des opérations à effectuer par l'abonné visiophonique appelant. Il doit composer lui-même le numéro d'appel et, si le terminal visiophonique appelé est filtré, il doit dialoguer avec l'usager du poste filtrant avant d'obtenir la communication avec le correspondant qu'il souhaite, communication qu'il ne sera pas possible d'établir en mode visiophonique dans le cas d'un poste filtrant classique.

L'invention vise également à offrir, à titre optionnel, la possibilité, à l'utilisateur d'un terminal visiophonique, de faire effectuer l'appel vers un autre terminal à partir d'un poste téléphonique, sans pour autant nécessiter une adjonction appréciable d'équipement.

Dans ce but l'invention propose notamment un procédé suivant la revendication 4.

La poursuite de l'établissement de la liaison dépend des capacités et du montage du terminal visiophonique appelé. A son niveau, la procédure est classique dans la mesure où le terminal visiophonique appelé n'est pas filtré. S'il est filtré de façon classique par un poste téléphonique, il y a repliement en mode téléphonique. Si le terminal appelé est filtré par un poste mais est prévu pour mettre en oeuvre le procédé d'accueil mentionné plus haut, l'établissement de la liaison visiophonique s'effectue comme il a été indiqué à l'occasion de la description du premier aspect de l'invention.

On voit que, lorsque les deux aspects de l'invention sont utilisés, l'usager d'un terminal visiophonique raccordé à un autocommutateur privé sur une interface de type SO dispose de services pratiquement les mêmes que ceux qu'assure l'autocommutateur aux postes téléphoniques qui lui sont reliés sur une interface dédiée privée, pouvant supporter des liaisons en mode CCBT.

On constate également que la mise en oeuvre du second aspect exige essentiellement un logiciel supplémentaire, mais n'exige pratiquement pas de compliquer l'équipement.

L'invention sera mieux comprise à la lecture de la description qui suit d'un mode particulier de réalisation, donné à titre d'exemple non-limitatif. La description se réfère aux dessins qui l'accompagnent, dans lesquels :

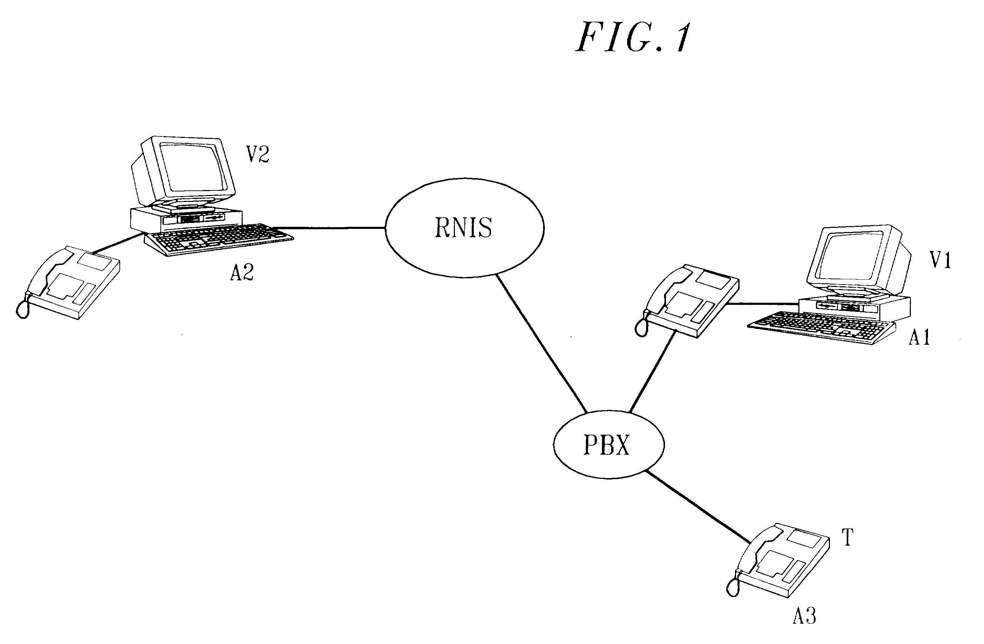

- la figure 1 montre schématiquement un schéma d'acheminement d'appel, depuis un terminal visiophonique appelant V2 vers un terminal visiophonique appelé V1, par l'intermédiaire d'un autocommutateur privé PBX ;
- les figures 2A et 2B montrent une séquence possible des opérations qui interviennent en cas d'appel du visiophone V2 vers un visiophone V1 filtré, conformément à un premier aspect de l'invention ;
- la figure 3 montre une séquence possible d'opérations qui interviennent en cas d'appel depuis un visiophone V'1 filtré vers un autre visiophone, conformément à un autre aspect de l'invention.

Un premier aspect de l'invention sera exposé dans son application à l'établissement d'une communication à partir d'un terminal visiophonique appelant V2 vers un terminal visiophonique V1 filtré par un poste téléphonique de filtrage T, par l'intermédiaire d'un réseau numérique à intégration de service RNIS de type NUMERIS et/ou d'un autocommutateur privé PBX. Le visiophone appelé est prévu pour pouvoir supporter l'établissement de communications sur deux canaux B tramés à la norme CCITT H 221, tandis que le poste téléphonique de filtrage n'est prévu que pour un service téléphonique, numérique ou analogique.

On désignera par A1, A2 et A3 les numéros d'appel des terminaux et postes V1, V2 et T. L'invention peut être mise en oeuvre aussi bien dans le cas où le terminal V2 est directement rattaché à l'autocommutateur PBX que dans le cas où il y accède par le réseau public.

### FONCTIONNEMENT D'UNE INSTALLATION CLASSIOUE

Avant d'exposer l'invention, on rappellera la succession des opérations qui interviennent dans une installation classique d'appel d'un terminal visiophonique filtré, d'adresse ou numéro d'appel A1, renvoyé vers un poste de filtrage d'adresse A3.

L'abonné au numéro d'appel A2 appuie par exemple sur la touche "visiophonie" de son terminal, numérote l'adresse A1 du correspondant demandé et appuie sur la touche "envoi".

Il y a alors tentative de connexion en mode visiophonie avec le terminal V1. Pour cela, le terminal V2 envoie par le réseau une demande d'établissement de liaison avec V1, à l'adresse A1, sur un canal transparent CCBT. Mais l'appel échoue du fait de l'incapacité du poste T à traiter un appel CCBT, en même temps qu'il y a une tonalité d'acheminement. Faute d'une réponse par le téléphone T du fait du défaut d'établissement de la commutation par le PBX, il y a, après une temporisation et une nouvelle présentation d'appel, libération du CCBT.

Après cette séquence, terminée par la libération du canal CCBT, le visiophone V2 peut être prévu pour lancer automatiquement une séquence de connexion, cette fois en mode téléphonie. Cette séquence comporte une demande d'établissement de liaison avec le terminal d'adresse A1, sur un canal non transparent CCBNT, en téléphonie. La présentation de l'appel au poste téléphonique T de filtrage, à l'adresse A3 s'effectue suivant le processus habituel et s'achève par l'acquittement de connexion (ACK connexion). Il y a alors passage en conversation entre le terminal visiophonique V2 et le poste téléphonique de filtrage T.

Classiquement, le poste T peut transférer l'appel téléphonique vers le visiophone V2. La séquence jusqu'au passage en conversation entre V1 et V2 est alors classique.

On constate qu'il n'est pas possible dans ces conditions d'établir une liaison visiophonique entre les terminaux V1 et V2.

### PROCEDE D'ETABLISSEMENT DE LIAISON VISIOPHONIOUE

On décrira maintenant un procédé suivant un mode particulier de réalisation de l'invention permettant l'établissement de la communication visiophonique sans qu'il soit nécessaire de renoncer au filtrage et au prix de modifications du terminal appelé qui restent simples, le terminal appelant pouvant de son côté être classique, ainsi que l'autocommutateur PBX. L'invention utilise pour cela la disponibilité, au moins au niveau du terminal appelé, de deux canaux B auxquels il suffit d'ajouter, dans le terminal V1, des capacités de commutation de ces canaux, de génération de signaux à fréquence vocale et de réception/décodage de tels signaux. Les moyens de réception doivent être adaptés à un générateur correspondant qui est prévu dans le poste de filtrage : à l'heure actuelle, les postes téléphoniques destinés à être rattachés à des PBX présentent, sauf pour des modèles très bas de gamme, les fonctionnalités nécessaires (générateur à couples de fréquences vocales).

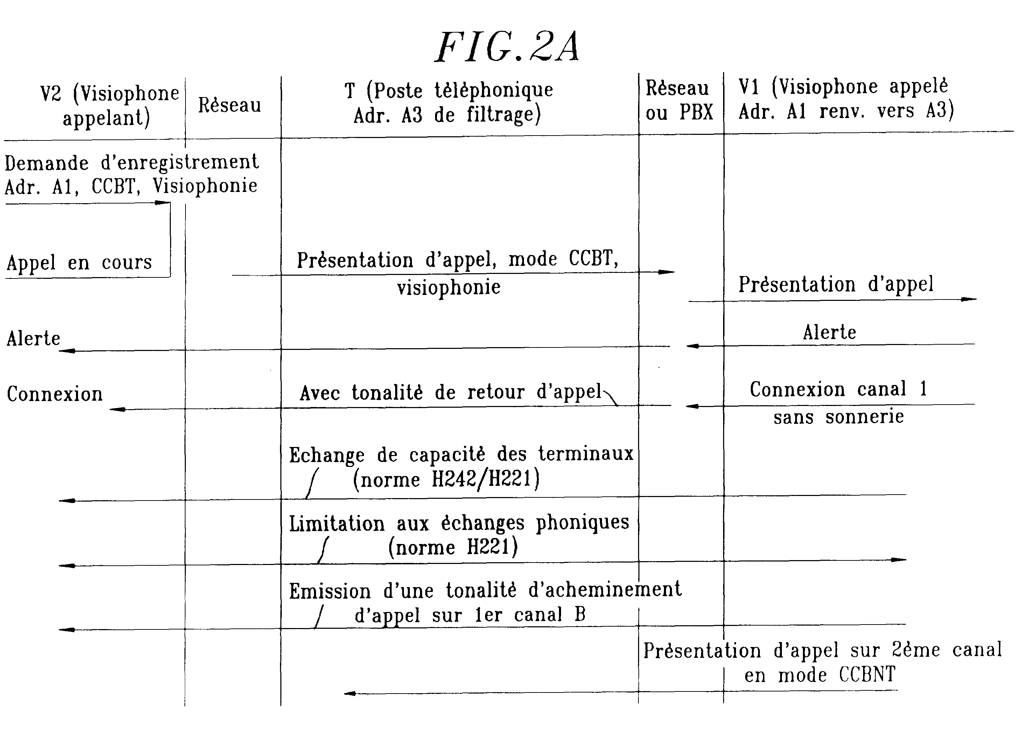

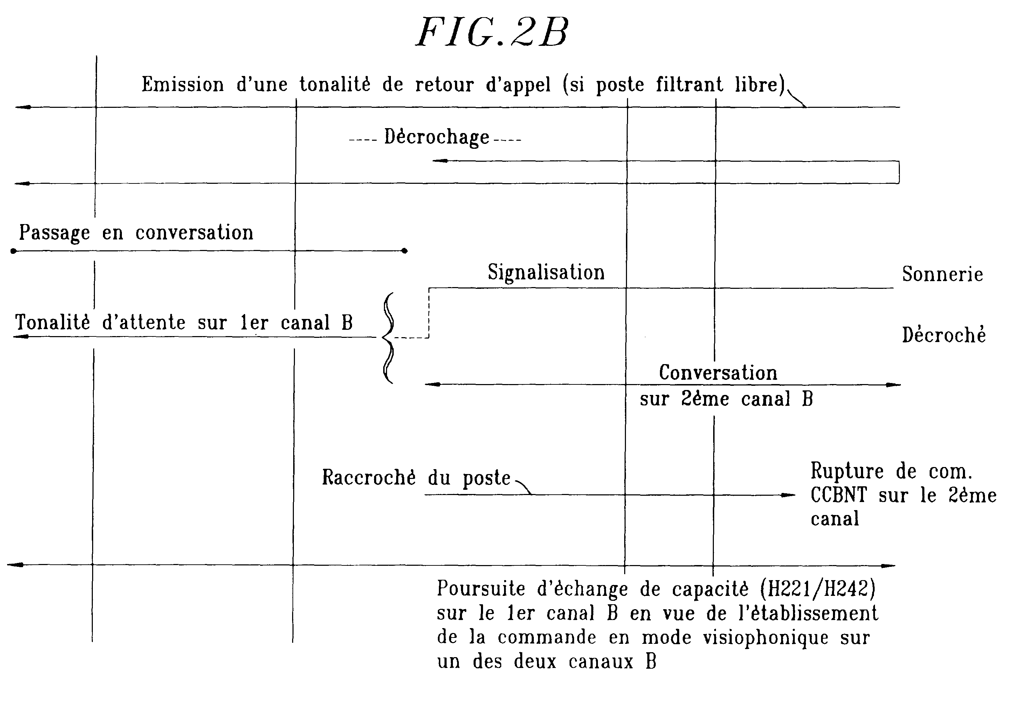

La partie initiale de la séquence est la même que dans le cas d'établissement de liaison entre visiophones non filtrés (figure 2). L'abonné au numéro d'appel A2 (terminal visiophonique V2) fait une demande d'établissement de liaison avec le terminal V1. Un appel CCBT est émis par V2 sur son premier canal B. Généralement le visiophone V1 sera muni d'un sélecteur muni d'un indicateur d'état permettant à l'utilisateur de le faire fonctionner soit de façon classique en mode non filtré, soit en mode filtré par le poste téléphonique T. Seul ce second mode sera maintenant exposé. V1 établit automatiquement une communication avec V2 sur ce premier canal B, en mode CCBT, mais cette fois sans qu'il y ait sonnerie et sans qu'il y ait intervention de l'abonné au terminal V1. Les protocoles H 221 et H 242 sont mis en oeuvre sur ce premier canal B pour établir une communication phonique.

Simultanément, des moyens prévus dans le terminal V1, pouvant être constitués par un microprocesseur programmé assurant également d'autres fonctions, négocient l'établissement d'une communication de type son monocanal, conforme par exemple à la norme G 711 en mode CCBNT sur son deuxième canal B, avec le téléphone T. Sur le premier canal B, établi, V1 émet vers V2 une tonalité d'acheminement, aussi longtemps que le poste T n'a pas sonné. Des sonneries du poste T, V1 renvoie vers V2 une tonalité de retour d'appel.

V1 maintient sur le second canal B, un appel à destination du poste téléphonique de filtrage T jusqu'au décroché du poste T ou bien jusqu'à abandon de l'appel par le terminal V2.

Le décroché de T met automatiquement les deux canaux B en relation au niveau de V1, de façon à acheminer la communication par le premier canal B entre V2 et V1, par le second canal B entre V1 et T. L'abonné au poste téléphonique T peut alors accueillir V2 et par exemple vérifier que l'abonné au terminal V2 souhaite une communication en visiophonie avec V1.

L'abonné du poste téléphonique T compose alors sur son clavier un code de signalisation prédéterminé, émis en fréquences vocales vers le terminal V1.

Lors de la détection et de l'identification de ce code, le terminal V1 rompt la communication entre ses deux canaux B et émet vers V2 une tonalité d'attente ou de mise en garde.

La mise en relation mutuelle des deux canaux et la rupture de cette mise en liaison exigent simplement d'ajouter, au terminal V1, un commutateur de canaux et des moyens de commande de ce commutateur à partir du microprocesseur programmé. Le microprocesseur peut assurer les fonctions d'identification du code de signalisation.

Le microprocesseur commande la sonnerie du terminal V1 de façon à alerter l'usager du terminal V1 en même temps que l'émission de la tonalité d'attente vers V2.

Lorsque l'abonné au terminal V1 décroche, il est en relation avec le poste téléphonique T sur le second canal, sans retransmission vers V2. L'abonné du poste T peut alors offrir l'appel de V2.

Si l'appel est accepté, il suffit généralement de raccrocher le poste T pour provoquer, du fait de la rupture du second canal, l'émission par V1, sur son premier canal B, à destination de V2, d'une demande d'établissement d'appel visiophonique, en signalisation H 242, sur un ou deux canaux B.

Une fois la connexion réalisée, le passage en visiophonie est complet.

Si l'abonné V1 refuse l'appel offert par T, il raccroche. Le microprocesseur est prévu pour rétablir alors la liaison entre les deux canaux B de V1, donc la liaison téléphonique entre T et V2. La communication sera ensuite rompue par raccroché de T ou de V2.

Le procédé défini ci-dessus est susceptible d'être mis en oeuvre sur tout terminal visiophonique capable d'établir des communications sur deux canaux B, même lorsque le terminal éloigné appelant n'est capable que de traiter un seul canal CCBT. Il est nécessaire d'ajouter à un terminal classique V1, pour ce faire, un commutateur de canaux permettant de relier les canaux entre eux, de façon à router, vers le poste téléphonique de filtrage T associé, la liaison établie automatiquement, sans intervention de l'abonné, sur un seul canal avec le terminal appelant. Ce commutateur a la fonction supplémentaire de relier les canaux B avec des générateurs et récepteurs de tonalité. L'invention peut être implantée sur un terminal ayant des capacités de visualisation et de transmission, tel qu'un micro-ordinateur muni d'un écran d'affichage. Le procédé peut également être implémenté non pas directement dans le terminal visiophonique, mais dans un autocommutateur ou micro-commutateur externe.

L'ensemble des fonctions de commande peut être assuré par un logiciel multitâche chargé en mémoire d'une unité de calcul qui peut être un microprocesseur assurant également les fonctions classiques dans un terminal.

### PROCEDE D'ETABLISSEMENT DE LIAISON VISIOPHONIOUE A PARTIR D'UN TERMINAL FILTRE APPELANT

On décrira maintenant un procédé permettant l'établissement de la communication visiophonique par l'usager d'un poste filtrant, sur demande de l'usager du terminal appelant. On désignera par V'1 le terminal appelant, par T' le poste filtrant, par V'2 le terminal visiophonique appelé distant.

Le procédé utilise les mêmes capacités du terminal visiophonique appelant V'1 que celles requises pour la mise en oeuvre du procédé qui vient d'être décrit, autorisant l'établissement d'une liaison visiophonique lorsque le terminal appelé est filtré. Ces capacités sont notamment les suivantes :
- gestion indépendante et coordonnée de deux canaux B (à 64 kb/s) d'une interface SO d'un réseau RNIS,
- gestion du tramage H221 des canaux B et de la signalisation H242,
- capacité de commutation des deux canaux B entre eux ou vers des générateurs/récepteurs de signalisation en bande,
- générateur de tonalités,
- récepteur de codes à fréquence vocale, dits DTMF.

La mise en oeuvre du procédé nécessite de plus que le terminal appelant V'1 soit apte à générer au moins deux numéros de SDA d'une même interface SO, le premier numéro de SDA étant affecté au numéro d'appel public du terminal V'1 tandis que le second numéro est réservé à l'usage du poste T' filtrant les appels sortants.

Le principe consiste à faire établir l'appel visiophonique par le terminal V'1 lui-même en le commandant à distance à partir du poste téléphonique T' de filtrage.

Le logiciel implanté dans le terminal V'1 est alors prévu pour permettre la télécommande de V'1 sur un canal B, à partir du poste filtrant T', sur appel sur le second numéro du terminal.

Une communication en mode CCBNT est ainsi réalisée sur ce premier canal B. Le second canal B est utilisé par l'automate d'établissement d'appel, implanté dans le logiciel du terminal V'1, pour appeler le visiophone V'2 distant, en mode CCBT tramé H221.

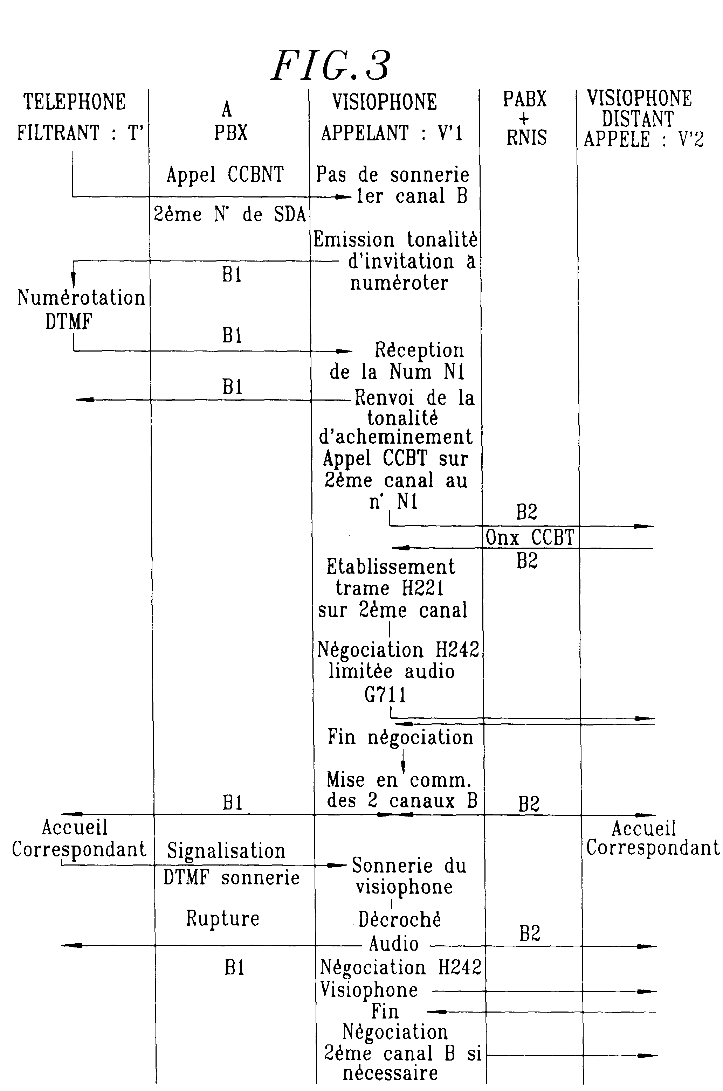

La séquence des opérations qui interviennent au niveau du terminal appelant V'1 du poste téléphonique filtrant T' apparaît sur la figure 3.

L'usager du terminal appelant V'1 appelle le poste filtrant T' et demande la mise en communication visiophonique avec un correspondant V'2, puis il raccroche.

L'usager du poste T' appelle alors le terminal visiophonique local V'1 sur le second numéro de SDA pour établir une communication CCBNT sur le premier canal B1 du terminal V'1, sans qu'il y ait eu sonnerie du terminal V'1 ou action de l'usager de ce terminal.

Le terminal V'1 émet alors sur le canal B1 une tonalité d'invitation à numéroter.

En réponse, l'usager du poste T compose sur son clavier, en fréquences vocales ou DTMF, le numéro d'appel du correspondant souhaité, c'est-à-dire du terminal distant V'2. A réception de cette numérotation, V'1 émet vers T', sur le canal B1, une tonalité d'acheminement. Et en même temps il émet un appel CCBT à destination de V'2 sur son canal B2.

On supposera tout d'abord que l'appel s'établit directement avec un poste visiophonique non-filtré. Dans ce cas le poste V'1 réalise le tramage H221 du canal B2 et négocie, avec le terminal distant V'2, une communication du type audio G711 en loi A.

Aussitôt après, V'1 met ses deux canaux B en communication mutuelle, afin de permettre à l'usager du poste téléphonique filtrant T' d'offrir à l'usager du terminal distant appelé V'2 le transfert d'appel vers l'usager de V'1.

Si l'appel est accepté, l'usager du poste T' émet alors, de nouveau en DTMF, une signalisation vers V'1 pour provoquer la sonnerie du visiophone V'1.

Lors du décroché de l'usager du terminal V'1, ce terminal V'1 rompt la communication sur les canaux B1, mettant ainsi les usagers des deux terminaux en relation phonique.

Le terminal V'1 négocie alors automatiquement, en H242, la fin de l'établissement de la communication visiophonique sur un ou deux canaux B, suivant un processus qui est traditionnel.

Si le terminal appelé est filtré par un poste téléphonique et est prévu pour permettre l'accueil d'un appel visiophonique, le processus est celui défini plus haut.

## Revendications

1. Procédé d'établissement d'une communication visiophonique depuis un terminal visiophonique appelant (V2) vers un terminal visiophonique appelé (V1) à deux canaux B, filtré par un poste téléphonique (T), caractérisé en ce que :
- on établit une communication sur un premier canal CCBT entre un terminal visiophonique appelant (V2) et un terminal visiophonique appelé (V1) ;
- on émet automatiquement, à partir du terminal appelé (V1), une tonalité de retour d'appel vers le terminal appelant (V2) sur le premier canal et on émet un appel depuis le terminal appelé vers le poste téléphonique (T) le second canal B pour établir une liaison entre le terminal appelant (V2) et le poste téléphonique (T) ;
- en réponse au décroché de l'appareil téléphonique, on relie automatiquement les deux canaux à partir du terminal appelé (V1), pour router la communication provenant du terminal appelant (V2) vers le poste téléphonique (T) rupture de la communication sur le premier canal CCBT ;
- on émet un code de signalisation à fréquences vocales volontairement à partir du poste téléphonique (T) pour provoquer l'émission d'une tonalité d'attente vers le terminal visiophonique appelant (V2) et une sonnerie au terminal visiophonique appelé (V1) pour alerter l'usager correspondant en vue de l'établissement d'une relation avec le poste téléphonique ; et,
- en cas d'acceptation de l'abonné du terminal visiophonique appelé (V1), on poursuit automatiquement, en réponse au raccroche du poste téléphonique (T), le processus d'établissement de la communication visiophonique entre les terminaux visiophoniques.

2. Terminal visiophonique (V1) à deux canaux B pour la mise en oeuvre du procédé suivant la revendication 1, ayant un numéro d'appel direct (A1) et des moyens d'aiguillage d'appel entrant vers un poste téléphonique d'accueil (T), comprenant :
- des moyens capables, en réponse à l'établissement d'une liaison sur un premier canal B faisant suite à un appel depuis un terminal visiophonique appelant (V2), d'établir sur le second canal B une liaison avec le poste téléphonique (T) et de renvoyer une tonalité de retour d'appel ;
- un commutateur de canaux permettant de mettre en relation les deux canaux pour acheminer la communication du terminal appelant (V2) vers le poste téléphonique (T) en réponse au décroché de celui-ci ;
- un récepteur de code de signalisation provenant du poste téléphonique (T), coopérant avec le commutateur pour rompre la communication entre les deux canaux et avec la sonnerie du terminal appelé (V1) ; et
- des moyens d'émission, sur le premier canal CCBT, d'une demande, destinée au terminal appelant (V2), d'établissement d'une communication visiophonique.

3. Procédé d'établissement d'une communication visiophonique à partir d'un terminal visiophonique filtré appelant (V'1) prévu pour gérer au moins deux numéros de sélection directe à l'arrivée dont l'un est un premier numéro, d'appel public, et dont l'autre est un second numéro, réservé à l'usage d'un poste filtrant (T'), caractérisé en ce que :
- on émet, depuis le poste (T') qui filtre ledit terminal appelant (V'1), un appel vers le terminal appelant (V'1) sur le second numéro pour établir une communication CCBNT sur un premier canal B sans provoquer de sonnerie ;
- à réception par le poste filtrant (V'1), d'une tonalité d'invitation à numéroter, on forme le numéro d'appel du terminal visiophonique appelé (V'2) depuis le poste filtrant T pour provoquer la commande à distance et l'émission d'un appel CCBT par le terminal appelant filtré (V'1) à destination d'un terminal visiophonique (V'2) sur le second canal B ;

4. Procédé selon la revendication 3, caractérisé en ce que, après établissement de l'appel, on met automatiquement en communication les deux canaux B au niveau du terminal visiophonique appelant (V'1).

5. Procédé selon la revendication 4, caractérisé en ce que après ladite mise en communication des deux canaux, l'usager du poste filtrant (T), une fois qu'il a obtenu l'accord de l'usager du terminal visiophonique appelé, émet une signalisation provoquant la sonnerie du terminal appelant et le décroché sur le terminal provoque la rupture de la communication visiophone appelant-poste filtrant.

## Patentansprüche

1. Verfahren zum Aufbau einer Bildtelefon-Kommunikationsverbindung ausgehend von einem anrufenden Bildtelefon-Endgerät (V2) zu einem angerufenen Bildetelefon-Endgerät (V1) mit zwei über eine Telefonstation T gefilterten Kanälen B, dadurch gekennzeichnet, daß:
- man automatisch eine Kommunikationsverbindung auf einem ersten Kanal CCBT zwischen einem anrufenden Bildtelefon-Endgerät (V2) und einem angerufenen Bildtelefon-Endgerät (V1) aufbaut,
- man auf dem ersten Kanal ausgehend von dem angerufenen Endgerät (V1) einen Freiton an das anrufende Endgerät (V2) ausgibt und man auf dem zweiten Kanal B ausgehend von dem angerufenen Endgerät einen Ruf an die Telefonstation (T) ausgibt, um eine Verbindung zwischen dem anrufenden Endgerät (V2) und der Telefonstation (T) herzustellen,
- man in Antwort auf die Abnahme des Telefonapparats die beiden Kanäle ausgehend von dem angerufenen Endgerät (V1) automatisch verbindet, um die von dem anrufenden Endgerät (V2) stammende Kommunikationsverbindung ohne Unterbrechung der Kommunikationsverbindung auf dem ersten Kanal CCBT zu der Telefonstation (T) zu leiten,
- man einen Tonfrequenz-Signalcode gegebenenfalls von der Telefonstation (T) ausgibt, um die Ausgabe eines Anklopftons an das anrufende Bildetelefon-Endgerät (V2) und ein Klingelzeichen bei dem angerufenen BildtelefonEndgerät (V1) hervorzurufen, um den entsprechenden Benutzer auf den Aufbau einer Verbindung mit der Telefonstation hinzuweisen, und
- man im Fall der Annahme durch den Teilnehmer an dem angerufenen Bildtelefon-Endgerät (V1) in Antwort auf das Auflegen der Telefonstation (T) den Vorgang des Aufbaus der Bildtelefon-Kommunikationsverbindung zwischen den Bildtelefon-Endgeräten automatisch durchführt.

2. Bildtelefon-Endgerät (V1) mit zwei Kanälen B zur Ausführung des Verfahrens nach Anspruch 1, welches eine Direktwahlnummer (Al) und eine Einrichtung zum Leiten eines eingehenden Anrufs zu einer Empfangstelefonstation (T) aufweist, umfassend:
- eine Einrichtung, welche in Antwort auf einen auf einen Anruf hin von einem anrufenden Bildtelefon-Endgerät (V2) stattfindenden Aufbau einer Verbindung auf einem ersten Kanal B, auf dem zweiten Kanal B eine Verbindung mit der Telefonstation (T) aufbauen und einen Anklopfton zurückschicken kann,
- einen Kanalumschalter, der die beiden Kanäle in Verbindung setzen kann, um die Kommunikationsverbindung des anrufenden Endgeräts (V2) zu der Telefonstation (T) in Antwort auf die Abnahme derselben herzustellen,
- einen Empfänger für einen von der Telefonstation (T) herrührenden Signalcode, welcher Empfänger mit dem Umschalter zum Unterbrechen der Kommunikationsverbindung zwischen den beiden Kanälen und mit der Klingel des angerufenen Endgeräts (V1) zusammenwirkt, und
- eine Einrichtung zum Ausgeben einer für das anrufende Endgerät (V2) bestimmten Anforderung zum Aufbau der Bildtelefon-Kommunikationsverbindung auf dem ersten Kanal CCBT.

3. Verfahren zum Aufbau einer Bildtelefon-Kommunikationsverbindung ausgehend von einem gefilterten anrufenden Bildtelefon-Endgerät (V'1), welches dazu vorgesehen ist, wenigstens zwei Direktanruf-Auswahlnummern zu verwalten, von denen die eine eine erste Nummer für den öffentlichen Anruf ist und von denen die andere eine für die Verwendung durch eine Filterstation (T') reservierte zweite Nummer ist, dadurch gekennzeichnet, daß:
- man ausgehend von der Station (T'), welche das anrufende Endgerät (V'1) filtert, einen Anruf an das anrufende Endgerät (V'1) auf der zweiten Nummer ausgibt, um eine Verbindung CCBNT auf einem ersten Kanal B aufzubauen, ohne ein Läuten auszulösen,
- man bei Empfang eines Wahlaufforderungstons durch die filternde Station (V'1) die Anrufnummer des angerufenen BildtelefonEndgeräts (V'2) ausgehend von der filternden Station T bildet, um die Fernsteuerung und die Ausgabe eines Anrufs CCBT durch das gefilterte anrufenden Endgerät (V'1) in Richtung zu einem Bildtelefon-Endgerät (V'2) auf dem zweiten Kanal B hervozurufen.

4. Verfahren nach Anspruch 3, dadurch gekennzeichnet, daß man nach dem Aufbau des Anrufs die beiden Kanäle B im Bereich des anrufenden Bildtelefon-Endgeräts (V'1) automatisch in Kommunikationsverbindung setzt.

5. Verfahren nach Anspruch 4, dadurch gekennzeichnet, daß der Benutzer der filternden Station (T), nachdem die beiden Kanäle in Kommunikationsverbindung gesetzt sind, sobald er die Zusage des Benutzers des angerufenen Bildtelefon-Endgeräts erhalten hat, eine Signalisierung ausgibt, welche die Klingel des anrufenden Endgeräts betätigt und das Abnehmen an dem Endgerät die Unterbrechung der Kommunikationsverbindung zwischen anrufendem Bildtelefon und filternder Station hervorruft.

## Claims

1. Method for the establishment of a videophone communication from a calling videophone terminal (V2) to a called videophone terminal (V1) with two channels B, which is screened by a telephone set (T), characterized by:
establishing a communication on a first TBCC channel between a calling videophone terminal (V2) and a called videophone terminal (V1);
automatically emitting a ringing tone from the called terminal (V1) to the calling terminal (V2) on the first channel and emitting a call from the called terminal to the telephone set (T) on the second channel B to establish a link between the calling terminal (V2) and the telephone set (T):
in response to the unhooking of the telephone handset, automatically linking the two channels from the called terminal (V1), to route the communication originating from the calling terminal (V2) to the telephone set (T) without breaking the communication on the first TBCC channel;
emitting a voice frequency signalling code, intentionally from the telephone set (T) for causing emission of a waiting tone to the calling videophone terminal (V2) and a ringing to the called videophone terminal (V1) in order to alert the respective subscriber with a view to the establishment of a connection with the telephone set; and
in the event of acceptance on the part of the subscriber of the called videophone terminal (V1) proceeding with the process of establishment of the videophone communication between the videophone terminals is automatically in response to the hooking of the telephone set.

2. Videophone terminal (V1), with two channels B for the implementation of the method according to claim 1, having a direct call number (A1) and means for switching an incoming call to an acceptance telephone set (T) further comprising:
means apt, in response to the establishment of a link on a first channel B following a call from a calling videophone terminal (V2) to establish on the second channel B a link with the telephone set (T) and send back a ringing tone;
a channel switch permitting the placing in connection of the two channels to route the communication from the calling terminal (V2) to the telephone set (T) in response to the unhooking of the latter;
a receiver for a signalling code originating from the telephone set (T), cooperating with the switch to break the communication between the two channels and with the ringing of the called terminal (V1); and
means for the emission, on the first TBCC channel, of a request, intended for the calling terminal (V2), for the establishment of a videophone communication.

3. Method for the establishment of a videophone communication from a calling screened terminal (V1) arranged to manage at least two direct selection on arrival numbers, one of which is a first number, for public calling, and the other of which is a second number, reserved for the use of a screening set (T') characterized by:
emitting a call from the set (T') which screens said calling terminal (V'1), to the calling terminal (V'1) on the second number in order to establish an NTBCC communication on a first channel B without causing ringing;
on reception, by the screening set (V'1), of a tone requesting dialling, delivering the call number of the called videophone terminal (V'2) from the screening set (T) to cause remote control of and emission of a TBCC call by the screened calling terminal (V'1) to the destination of a videophone terminal (V'2) on the second channel B;

4. Method according to claim 3, characterized in that, after establishment of the call, the two channels B are automatically placed in communication at the level of the calling videophone terminal.

5. Method according to claim 4, characterized in that, after said placing in communication of the two channels, the user of the screening set (T), once he has obtained the approval of the user of the called videophone terminal, sends a signaling causing the ringing of the calling terminal and the unhooking on the terminal breaking of the calling videophone-screening set communication.
